# EUROPEAN PATENT SPECIFICATION

(11) **EP 0 976 784 B1**
(45) Date of publication and mention of the grant of the patent: **22.05.2002**
(21) Application number: 99905246.7
(22) Date of filing: 19.02.1999
(51) Int. Cl.: C08L 21/00, C08K 5/56, C08K 5/098, C08J 5/10

(54) **METAL/RUBBER ADHESION PROMOTER AND RUBBER COMPOSITION**
METALL/KAUTSCHUK HAFTVERMITTLER UND KAUTSCHUKZUSAMMENSETZUNG
PROMOTEUR D'ADHESION METAL/CAOUTCHOUC ET COMPOSITION DE CAOUTCHOUC

(30) Priority: 19.02.1998 JP 3741798
(43) Date of publication of application: 02.02.2000
(73) Proprietor: JAPAN ENERGY CORPORATION, Tokyo 105-0001 (JP)
(72) Inventor: IMORI, Toru, Isohara Plant of Japan Energy Corp., Kitaibaraki-shi, Ibaraki 319-1535 (JP); IIDA, Kazunori, Hitachi-shi, Ibaraki 317-0055 (JP)
(74) Representative: Schwabe - Sandmair - Marx
(86) International application number: JP9900737
(87) International publication number: WO9942519

(56) References cited:
- EP-A- 0 570 159
- JP-A- 6 329 839
- JP-A- 6 329 840
- JP-A- 9 216 968
- JP-A- 57 197 155
- US-A- 5 244 955
- PATENT ABSTRACTS OF JAPAN vol. 1999, no. 08, 30 June 1999 (1999-06-30) & JP 11 060820 A (JAPAN ENERGY CORP), 5 March 1999 (1999-03-05) & DATABASE WPI Derwent Publications Ltd., London, GB; & JP 11 060820 A (JAPAN ENERGY CORP), 5 March 1999 (1999-03-05)
- PATENT ABSTRACTS OF JAPAN vol. 1998, no. 04, 31 March 1998 (1998-03-31) & JP 09 316289 A (TOYO INK MFG CO LTD), 9 December 1997 (1997-12-09) & DATABASE WPI Derwent Publications Ltd., London, GB; & JP 09 316289 A, 9 December 1997 (1997-12-09)

## Description

### TECHNICAL FIELD

The present invention relates to an adhesion accelerator for enhancing the adhesive strength between rubber and metal. In particular, this invention relates to an adhesion accelerator for enhancing the adhesive strength of rubber to steel cords. In addition, the present invention also relates to a rubber composition containing the above adhesion accelerator.

### BACKGROUND ART

Heretofore, in order to improve the adhesive strength of natural or synthetic rubber to steel cords used as a reinforcement for a radial tire or a belt of a belt conveyer, there have been used, as an adhesion accelerator, cobalt-containing metal organic compounds such as cobalt stearate, cobalt naphthenate, cobalt-boron complex, etc. Although these cobalt-containing metal organic compounds have a high vulcanization accelerating ability, the presence of cobalt in rubber lowers the storage stability. Besides cobalt-containing organic compounds, some other metal organic compounds have also been investigated. In fact, many patents disclose the use of some specific metal organic compounds as adhesive strength improving agents. For instance, some organic acid cobalt salts are disclosed in the following patents. U.S. patent 1,919,718 discloses cobalt acetate and cobalt salts of low molecular fatty acids, particularly a cobalt stearate. U.S. patent 2,912,355 discloses cobalt oleate and cobalt citrate. U.K. patent 1,169,366 discloses cobalt linoleate and cobalt resinate. U.S. Patent 4,076,668 discloses cobalt salts of naphthenic acid, octylic acid, tall oil acid, etc. Japanese Patent Application Laid-Open No. 61-60743 discloses cobalt propionate, calcium propionate, magnesium propionate, nickel propionate, zinc propionate, etc. Japanese Patent Application Laid-Open No. 6-65142 discloses a metallic soap having a structure of naphthalene or biphenyl. Japanese Patent Application Laid-Open No. 60-15444 and Japanese Patent Application Laid-Open No. 60-158230 disclose cobalt borate and the like. Japanese Patent Application Laid-Open No. 60-199643 discloses a metal salt of thiosulfuric acid ester. Japanese Patent Application Laid-Open No. 59-207949 and Japanese Patent Application Laid-Open No. 6-329838 disclose a metallic soap having a specific ratio of cobalt to nickel, as an adhesion improving material. Japanese Patent Application Laid-Open No. 6-329840 discloses a metallic soap having a specific ratio of cobalt to zinc, as an adhesion improving material. Although the above substances have a good adhesive property in a specific aspect, they still fail to show a well-balanced adhesive strength as a whole.

It is an object of the present invention to provide an improved adhesion accelerator having an excellent adhesive property well comparable with or far superior to that of a cobalt organic compound and having an improved stability for storing. It is another object of the present invention to provide a rubber composition containing such an adhesion accelerator.

### DISCLOSURE OF THE INVENTION

The present inventors have found that the purposes of the invention can be achieved by adding a nickel organic compound and a zinc organic compound, in place of cobalt organic compounds. Namely, the present inventors have found that adding a nickel organic compound and a zinc organic compound in combination can produce an excellent adhesive property as compared with the case using a cobalt organic compound alone, and that an adhesion accelerator containing the above two compounds can produce an excellent adhesive property during a process of vulcanization at a high temperature and provide an excellent storing stability to the rubber kneaded therewith.

Namely, the present invention is directed to:
- An adhesion accelerator for bonding rubber to metal, comprising:
   at least one metal organic compound of nickel, selected from the group consisting of Ni-containing metallic soaps comprising a saturated or unsaturated carboxylic acid having 6 to 30 carbon atoms in its main chain or a mixture thereof, Ni-containing boron complex and Ni-acetyl acetonate, and
   at least metal organic compound of zinc, selected from the group consisting of Zn-containing metallic soaps comprising a saturated or unsaturated carboxylic acid having 6 to 30 carbon atoms in its main chain or a mixture thereof, Zn-containing boron complex and Zn-acetyl acetonate,
   blended together in a metal weight ratio of Ni/Zn from 0.01 to 20.
- A rubber composition comprising a rubber and an adhesion accelerator as claimed in any one of claims 1 to 3, wherein said adhesion accelerator is added in an amount of 0.1 to 10 parts by weight with respect to 100 parts by weight of the rubber component; and
- Use of a metal organic compound of nickel and a metal organic compound of zinc blended together in a weight ratio of Ni/Zn from 0.1 to 20 as an adhesion accelerator for bonding rubber to metal.

Preferred embodiments are set forth in the dependent claims.

### BEST MODEL FOR CARRYING OUT THE INVENTION

As set forth above, the present invention can provide synergistic improvements in the adhesive property and storage stability of a rubber composition due to the use of a combination of a nickel organic compound and a zinc organic compound.

The nickel organic compounds used in the present invention are nickel-containing compounds such as metallic soaps comprising carboxylic acid. Examples of such compounds are nickel naphthenate, nickel neodecanate, nickel stearate, nickel-containing boron complex and nickel acetylacetonate.

The zinc organic compounds used in the present invention are zinc-containing compounds such as metallic soaps comprising carboxylic acid. Examples of such compounds are zinc naphthenate, zinc neodecanate, zinc stearate, zinc-containing boron complex and zinc acetylacetonate.

Carboxylic acids used to form metallic soaps are natural or synthetic saturated or unsaturated carboxylic acids having 6 to 30 carbons in their main chains, or a mixture thereof. More specific examples are caproic acid, caprylic acid, capric acid, lauric acid, myristic acid, palmitic acid, stearic acid, iso-stearic acid, arachic acid, behenic acid, oleic acid, linoleic acid, linolenic acid, ricinoleic acid, 12-hydroxy stearic acid, dimeric acid, tall oil acid, naphthenate, neodecanoic acid, resin acid. Alternatively, there may be exemplified natural fatty acids, such as fish oil hardened fatty acid or beef tallow hardened fatty acid containing as its main component one or more of the above-listed acids. Therefore, as the metallic soaps obtained by using these carboxylic acids, nickel naphthenate and zinc neodecanate may be mentioned as preferable examples.

Further, in the present invention, metallic soaps as mentioned above may be used in the form of a mixed soap thereof and such a mixed soap may be prepared by a conventional process, such as a double decomposition process with alkali metallic soaps as intermediate products, a direct reaction process involving a direct reaction between metallic compounds and carboxylic acids, etc.

When a nickel organic compound and a zinc organic compound are to be added into a rubber material, these two compounds may be mixed in advance before being added into the rubber material, although they may be added separately to the rubber material.

Further, the present invention also provides a rubber composition comprising rubber and the above-mentioned adhesion accelerator wherein the adhesion accelerator is added in an amount of 0.1 - 10 parts by weight with respect to 100 parts by weight of the rubber.

In the present invention, the mixing ratio of the nickel organic compound and the zinc organic compound is from 0.01 to 20, preferably from 0.05 to 10, more preferably from 0.1 to 5, in terms of the weight ratio of metal nickel to metal zinc, Ni/Zn. If the metal weight ratio of Ni/Zn is less than 0.01, any significant improvement cannot be obtained in adhesive strength as compared with a case of using a cobalt soap alone, during vulcanization at a high temperature. On the other hand, if the ratio of Ni/Zn is more than 20, the adhesiveness will decrease.

In forming a rubber composition according to the present invention, as the rubber component, there can be used a natural rubber, a synthetic isoprene rubber, and some diene rubbers such as a styrene diene rubber, a polybutadiene rubber, all of which may be used as a mixture thereof. Further, the rubber component is preferred to contain a natural rubber and/or a synthetic isoprene rubber in an amount of 50 wt% or more.

Moreover, in the rubber composition of the present invention, the aforesaid adhesion accelerator is added in an amount of 0.1 - 10.0 parts by weight, preferably 0.2 - 5.0 parts by weight, with respect to 100 parts by weight of the rubber component. If the adhesion accelerator is added in an amount of less than 0.1 parts by weight, any improvement cannot be obtained in the adhesive strength after vulcanization. On the other hand, if the adhesion accelerator is added in an amount of more than 10.0 parts by weight, the adhesive strength will decrease.

Further, in the rubber composition of the present invention, sulfur is preferred to be added in an amount of 3 - 8 parts by weight with respect to 100 parts by weight of the rubber component.

In addition, compounding ingredients commonly used in a rubber manufacturing industry may be added in any appropriate amounts to the rubber composition of the present invention. Examples of such compounding ingredients include pigments such as carbon black or silica, softeners, vulcanization accelerators (e.g., sulfene amide, chiazole, thiuram), anti-aging agents (antioxidants) such as amine/ketone, diarylamine, etc.

Although metal to be bonded to the rubber composition of the present invention is not limited to specific kinds or shapes, steel cords are preferably used. In order to enhance the adhesion between the metal and the rubber, it is preferred to use metal plated with brass or zinc or metal plated with brass or zinc combined with nickel or cobalt. More preferably, metal to be bonded with the rubber is plated with copper. Also, there is not any limitation to the twisting structure of such metal material.

### EXAMPLE

The present invention will be described in more detail below by giving some examples and comparative examples in the following.

### Example 1

A rubber composition was prepared with the composition shown in Table 1.

Here, nickel naphthenate/zinc naphthenate (Ni content: 2.0%, Zn content: 9.0%, mol ratio of Ni/Zn: 1/4) obtained by double decomposition was used as a metal organic compound. Cobalt naphthenate used in a comparative example had a cobalt content of 10.1%. ACCEL DZ-G (Manufactured by Kawaguchi Chemical Industry Co., Ltd. N,N-dicyclohexyl-2-benzochiazole sulfene amide) was used as a vulcanization accelerator. Further, ANTIAGE 6C (Manufactured by Kawaguchi Chemical Industry Co., Ltd. N-1,3-dimethylbutyl-N'-phenyl-p-phenylene diamine) was used as an anti-aging agent (antioxidant).

### Testing Procedures:

A rubber composition formed by blending together the components in the respective proportions shown in Table 1 was kneaded in a two-roller test kneader so as to produce rubber sheets each having a thickness of 12 mm. Then, steel cords each having a size of 1 x 5 x 0.25 mm plated with brass (Cu content: 70%, Zn content: 30%) were embedded between the rubber sheets. Then, the sheets with the steel cords interposed therebetween were further subjected to vulcanization at a temperature of 145°C for about a time period of 30 minutes, thereby obtaining samples for each rubber composition in which the steel cords were embedded.

Each of the inventive sheet samples obtained in the above process was then subjected to pull-out a test in accordance with the procedures specified in ASTM-2229, thereby measuring the adhesive strength between the rubber and the steel cords in terms of adhesion percentage of rubber to the steel cords. The test results are shown in Table 2.

As a comparative example, the same adhesion test was performed on the comparative sample in which adhesion of the rubber to the steel cords was performed using the above-mentioned conventional cobalt soap, i.e., cobalt naphthenate, as a metal organic compound.

Each of the adhesion test values shown in Table 2 is an index number calculated from the average value of 20 samples, taking the index number of the average value of the comparative example as 100. The larger the values shown in Table 2, the better the test results should be deemed as.

**Table 1**

| Rubber Composition | |
|---|---|
| Composition | Added amount (parts by weight) |
| Natural rubber | 100.0 |
| Carbon black | 55.0 |
| Zinc oxide | 8.0 |
| Antioxidant | 2.0 |
| Insoluble sulfur | 5.0 |
| Vulcanization accelerator | 1.0 |
| Metal organic compound | 1.5 |

**Table 2**

| Aging test on adhesive property of rubbers with addition of metal soaps in various Zn/Ni ratios | | | | | |
|---|---|---|---|---|---|
| | Un-aged | Steam aged | Moisture-heat aged | Heat aged | 20%-salt aged |
| Example 1 | 100 | 102 | 110 | 100 | 167 |
| Comparative Example | 100 | 100 | 100 | 100 | 100 |

The un-aged adhesive property was determined by measuring the adhesive property of each sample after vulcanizing the sample at a temperature of 145°C for 25 minutes.

The steam-aging property was determined by aging the above vulcanized sample at a temperature of 121°C for 6 hours and then measuring the adhesive property of the sample.

The moisture and heat-aging property was determined by letting the above vulcanized sample stand at a temperature of 85°C and a humidity of 95% for 5 days and then measuring the adhesive property of the sample.

The heat-aging property was determined by letting the above vulcanized sample stand at a temperature of 85°C for 10 days and then measuring the adhesive property of the sample.

The aging property in a 20% salt solution was determined by immersing the above vulcanized sample in a 20% salt solution at a temperature of 25°C for 15 days, then measuring the adhesive property of the sample after drying.

It is understood from Table 2 that even in the above tests for measuring the moisture and heat-aging property and the aging property in the 20% salt solution, which tests were both conducted on the assumption of a severe corrosive environment, the rubber composition of the present invention was greatly improved in various properties as compared with a conventional rubber composition using the conventional cobalt naphthenate.

### Example 2

Nickel naphthenate, nickel naphthenate/zinc naphthenate and zinc naphthenate were produced by double decomposition. Using each of these compounds, a rubber composition was kneaded in the same way as described in Example 1 and was tested for adhesive property. The test results are shown in Table 3.

**Table 3**

| Comparison of Adhesion Test Results for Nickel Naphthenate/Zinc Naphthenate, Nickel Naphthenate and Zinc Naphthenate | | | | | | | |
|---|---|---|---|---|---|---|---|
| Zn content (%)*¹ | Ni content (%)*² | Added amount (phr)*³ | Unaged | Steam aged | Moisture-heat aged | Heat aged | 20%-salt aged |
| - | 12.1 | 1.30 | 99 | 107 | 87 | 105 | 145 |
| 5.3 | 5.8 | 1.42 | 100 | 112 | 110 | 105 | 150 |
| 11.4 | - | 1.38 | 96 | 92 | 64 | 97 | 140 |

| | | | | | | | |
|---|---|---|---|---|---|---|---|
| *1 and *2: Zn content and Ni content are contents of the respective metals in the respective metallic soaps. | | | | | | | |
| *3: Added amount of each metallic soap added during rubber kneading | | | | | | | |

As is understood from Table 3, the rubber composition containing the nickel naphthenate/zinc naphthenate showed a better adhesive property than the other rubber compositions containing either the nickel naphthenate or the zinc naphthenate, both in the aging test in 20% salt solution and the moisture and heat-aging test. These test results show that the rubber composition containing the nickel naphthenate/zinc naphthenate had a well-balanced adhesive property as compared with the rubber compositions containing either the nickel naphthenate or the zinc naphthenate.

### Example 3

A nickel naphthenate/zinc neodecanate having the following metal contents was produced by double decomposition and kneaded with other components in the same compounding proportions as described in Example 1. The resultant rubber composition was tested for adhesive property. The test results are shown in Table 4.

**Table 4**

| Adhesion Test Results for Nickel Naphthenate/Zinc Neodecanate | | | | | | | |
|---|---|---|---|---|---|---|---|
| Zn content (%) | Ni content (%) | Added amount (phr)* | Unaged | Steam aged | Moisture-heat aged | Heat aged | 20%-salt aged |
| 6.9 | 6.7 | 1.23 | 106 | 110 | 115 | 105 | 155 |

| | | | | | | | |
|---|---|---|---|---|---|---|---|
| *: Added amount of each metallic soap added during rubber kneading | | | | | | | |

As is understood from Table 4, the rubber composition containing the nickel naphthenate/zinc neodecanate exhibited an excellent adhesive property like the rubber composition containing nickel naphthenate/zinc naphthenate.

### INDUSTRIAL APPLICABILITY

As can be understood from the above description, since the adhesion accelerator of the present invention for bonding rubber to steel cords is prepared by adding a metal organic compound containing nickel and another metal organic compound containing zinc, it is sure to more effectively inhibit a deterioration of the adhesive strength, which is considered to be caused especially due to corrosion, as compared with a conventional adhesion accelerator containing a conventional cobalt organic compound alone.

Therefore, the present invention can suitably be applied to the manufacture of a rubber product such as a tire and a belt conveyer in which steel cords are used as a reinforcement.

## Claims

1. An adhesion accelerator for bonding rubber to metal, comprising:
at least one metal organic compound of nickel, selected from the group consisting of Ni-containing metallic soaps comprising a saturated or unsaturated carboxylic acid having 6 to 30 carbon atoms in its main chain or a mixture thereof, Ni-containing boron complex and Ni-acetyl acetonate, and
at least metal organic compound of zinc, selected from the group consisting of Zn- containing metallic soaps comprising a saturated or unsaturated carboxylic acid having 6 to 30 carbon atoms in its main chain or a mixture thereof, Zn-containing boron complex and Zn-acetyl acetonate,
blended together in a metal weight ratio of Ni/Zn from 0.01 to 20.

2. The adhesion accelerator for bonding rubber to metal as claimed in claim 1, in which said metal organic compound of nickel and said metal organic compound of zinc are metallic soaps.

3. The adhesion accelerator for bonding rubber to metal as claimed in claim 1 or 2, in which said metal organic compound of nickel and said metal organic compound of zinc are blended together at a metal weight ratio of Ni/Zn ranging from 0.05 to 10.

4. A rubber composition comprising a rubber and an adhesion accelerator as claimed in any one of claims 1 to 3, wherein said adhesion accelerator is added in an amount of 0.1 to 10 parts by weight with respect to 100 parts by weight of the rubber component.

5. Use of a metal organic compound of nickel and a metal organic compound of zinc blended together in a weight ratio of Ni/Zn from 0.01 to 20 as an adhesion accelerator for bonding rubber to metal.

6. Use of claim 5, wherein said metal organic compound of nickel and said metal organic compound of zinc are metallic soaps.

## Patentansprüche

1. Haftungsbeschleuniger zum Binden von Kautschuk an Metall, umfassend
mindestens eine metallorganische Verbindung von Nickel, ausgewählt aus der aus nickelhaltigen metallischen Seifen, die eine gesättigte oder ungesättigte Carbonsäure mit 6 bis 30 Kohlenstoffatomen in ihrer Hauptkette oder ein Gemisch davon aufweisen, einem nickelhaltigen Borkomplex und Nickelacetylacetonat bestehenden Gruppe,
mindestens eine metallorganische Verbindung von Zink, ausgewählt aus der der aus zinkhaltigen metallischen Seifen, die eine gesättigte oder ungesättigte Carbonsäure mit 6 bis 30 Kohlenstoffatomen in ihrer Hauptkette oder ein Gemisch davon aufweisen, einem zinkhaltigen Borkomplex und Zinkacetylacetonat bestehenden Gruppe,
die in einem Metallgewichtsverhältnis von Ni : Zn von 0,01 bis 20 vermischt werden.

2. Haftungsbeschleuniger zum Binden von Kautschuk an Metall nach Anspruch 1, in dem die metallorganische Verbindung von Nickel und die metallorganische Verbindung von Zink metallische Seifen sind.

3. Haftungsbeschleuniger zum Binden von Kautschuk an Metall nach Anspruch 1 oder 2, in dem die metallorganische Verbindung von Nickel und die metallorganische Verbindung von Zink in einem Metallgewichtsverhältnis von Ni : Zn im Bereich von 0,05 bis 10 vermischt werden.

4. Kautschukzusammensetzung, die einen Kautschuk und einen Haftungsbeschleuniger nach einem der Ansprüche 1 bis 3 umfasst, in der der Haftungsbeschleuniger in einer Menge von 0,1 bis 10 Gewichtsteilen bezogen auf 100 Gewichtsteile der Kautschukkomponente zugesetzt wird.

5. Verwendung einer metallorganischen Verbindung von Nickel und einer metallorganischen Verbindung von Zink, die in einem Gewichtsverhältnis von Nickel zu Zink von 0,01 bis 20 vermischt werden, als Haftungsbeschleuniger zum Binden von Kautschuk an Metall.

6. Verwendung nach Anspruch 5, in der die metallorganische Verbindung von Nickel und die metallorganische Verbindung von Zink metallische Seifen sind.

## Revendications

1. Accélérateur d'adhésion pour lier du caoutchouc à du métal, comprenant :
au moins un composé organique métallique de nickel, choisi dans le groupe constitué par les savons métalliques contenant Ni comprenant un acide carboxylique saturé ou insaturé ayant 6 à 30 atomes de carbone dans sa chaîne principale ou un mélange de ceux-ci, un complexe du bore contenant Ni et l'acétylacétonate de Ni, et
au moins un composé organique métallique de zinc, choisi dans le groupe constitué par les savons métalliques contenant Zn, comprenant un acide carboxylique saturé ou insaturé ayant 6 à 30 atomes de carbone dans sa chaîne principale ou un mélange de ceux-ci, un complexe du bore contenant Zn et l'acétylacétonate de Zn,
mélangés ensemble en un rapport pondéral des métaux Ni/Zn de 0,01 à 20.

2. Accélérateur d'adhésion pour lier du caoutchouc à du métal selon la revendication 1, dans lequel ledit composé organique métallique de nickel et ledit composé organique métallique de Zn sont des savons métalliques.

3. Accélérateur d'adhésion pour lier du caoutchouc à du métal selon la revendication 1 ou 2, dans lequel ledit composé organique métallique de nickel et ledit composé organique métallique de zinc sont mélangés ensemble à un rapport pondéral des métaux Ni/Zn allant de 0,05 à 10.

4. Composition de caoutchouc comprenant un caoutchouc et un accélérateur d'adhésion tel que revendiqué dans l'une quelconque des revendications 1 à 3, dans laquelle ledit accélérateur d'adhésion est ajouté en une quantité de 0,1 à 10 parties en poids pour 100 parties en poids du constituant caoutchouc.

5. Utilisation d'un composé organique métallique de nickel et d'un composé organique métallique de zinc mélangés ensemble en un rapport pondéral Ni/Zn de 0,01 à 20 en tant qu'accélérateur d'adhésion pour lier du caoutchouc à du métal.

6. Utilisation selon la revendication 5, dans laquelle ledit composé organique métallique de nickel et ledit composé organique métallique de zinc sont des savons métalliques.
